# EUROPEAN PATENT SPECIFICATION

(11) **EP 4 360 275 B1**
(45) Date of publication and mention of the grant of the patent: **11.02.2026**
(21) Application number: 21737002.2
(22) Date of filing: 23.06.2021
(51) Int. Cl.: H04L 41/5067, H04L 43/028, H04L 43/026, H04L 41/149, H04L 41/40, H04L 43/20, H04L 43/062, H04L 43/08, H04L 41/147, H04L 43/16

(54) **DATA TRAFFIC QUALITY ANALYSIS**
DATENVERKEHRSQUALITÄTSANALYSE
ANALYSE DE QUALITÉ DE TRAFIC DE DONNÉES

(43) Date of publication of application: 01.05.2024
(73) Proprietor: Telefonaktiebolaget LM Ericsson (publ), 164 83 Stockholm (SE)
(72) Inventor: ZLATNICZKI, Ádám, 6640 Csongrád (HU); VARGA, Botond, 1025 Budapest (HU); MAGYAR, Gábor, 2330 Dunaharaszti (HU)
(74) Representative: Ericsson
(86) International application number: PCT/EP2021/067135
(87) International publication number: WO 2022/268308

(56) References cited:
- US-A1- 2020 186 615
- MANGLA TARUN ET AL: "Using Session Modeling to Estimate HTTP-Based Video QoE Metrics From Encrypted Network Traffic", IEEE TRANSACTIONS ON NETWORK AND SERVICE MANAGEMENT, IEEE, USA, vol. 16, no. 3, 1 September 2019 (2019-09-01), pages 1086 - 1099, XP011744571, DOI: 10.1109/TNSM.2019.2924942
- PAN WUBIN ET AL: "QoE Assessment of Encrypted YouTube Adaptive Streaming for Energy Saving in Smart Cities", IEEE ACCESS, vol. 6, 24 May 2018 (2018-05-24), pages 25142 - 25156, XP011684133, DOI: 10.1109/ACCESS.2018.2811416
- LOH FRANK ET AL: "Is the Uplink Enough? Estimating Video Stalls from Encrypted Network Traffic", NOMS 2020 - 2020 IEEE/IFIP NETWORK OPERATIONS AND MANAGEMENT SYMPOSIUM, IEEE, 20 April 2020 (2020-04-20), pages 1 - 9, XP033777600, DOI: 10.1109/NOMS47738.2020.9110267

## Description

### Technical Field

The present disclosure generally relates to a method, an apparatus and a network function for analyzing data traffic quality of data traffic flowing between a user equipment and a server of a video service provider.

### Background

Generally, video traffic has the largest share among mobile data traffic. It is predicted that the amount of video traffic in mobile networks may grow significantly over the coming years in particular due to an increasing number of video-capable smart devices. Video traffic is thus estimated to account for approximately threequarters of all total mobile data traffic by 2024. Furthermore, the spread of 5^{th} generation (5G) may bring significant improvements in network performance and may pave the way for immersive media technologies, such as, but not limited to 360-degree video streaming and augmented/virtual reality applications, which may further contribute to the rapid growth of video traffic.

Nowadays, video traffic is generally mostly encrypted. As a result, analysis and management of mobile video traffic are becoming more and more difficult. Over the last decade, transport-level encryption has spread rapidly, and it is expected that transport-level encryption intensifies even more over the coming years. The ratio of encrypted traffic has already reached 80% globally, and close to 100% if one considers Over-The-Top (OTT) Internet service providers (ISPs).

It is important to analyze video quality of experience. In particular, analysis of video traffic is important for Mobile Network Operators (MNOs) as it has a large impact on customer experience. For customers to have good experience, MNOs may need to have good estimates of key performance indicators (KPIs), such as, but not limited to video bitrate, resolution, stall time and video mean opinion score (MOS) so as to optimize the MNOs networks for adequate/improved customer experience.

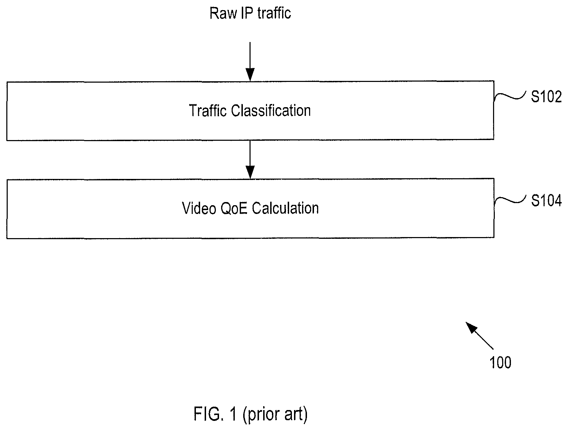

Figure 1 is a flow diagram of a method 100 according to the state-of-the-art. As can be seen, raw IP traffic is provided for traffic classification (S102). IP packets are hereby processed and traffic classification is applied thereto, followed by (conditional) video QoE calculation (S104).

Traffic classification may be a process of assigning a service (for example Facebook newsfeed, YouTube video, Google Maps, etc.) to each TCP/UDP packet (or rather, connection). Since a user may consume different services at the same time, this may be important so that the overall traffic may need to be split into services and analyzed separately from a QoE perspective. Traffic qualification may either simply label the traffic, or it may act as a router (so depending on the service, it may send the filter traffic to different QoE measurement modules that are best suited for that kind of traffic).

MANGLA TARUN ET AL: "Using Session Modeling to Estimate HTTP-Based Video QoE Metrics From Encrypted Network Traffic", IEEE TRANSACTIONS ON NETWORK AND SERVICE MANAGEMENT, IEEE, USA, vol. 16, no. 3, 1 September 2019 (2019-09-01), pages 1086-1099, XP011744571, discloses eMIMIC, a methodology to estimate QoE metrics of encrypted video using passive network measurements. To facilitate extensive evaluation, an experimental framework has been developed that enables automated streaming and collection of network traces and ground truth QoE metrics of three popular video service providers, including both VoD and live content.

It is a challenge to analyze video quality of experience in view of the high share of video traffic among total mobile data traffic and in light of most of the video traffic being encrypted.

### Summary

Accordingly, there is a need for optimizing data traffic quality analysis of data traffic flowing between a user equipment and a server of a video service provider.

The invention is defined by the subject-matter of the independent claims.

Advantageous embodiments are indicated in the dependent claims.

### Brief Description of the Drawings

Further aspects, details and advantages of the present disclosure will become apparent from the detailed description of exemplary embodiments below and from the drawings, wherein:
Fig. 1 is a flow diagram of a method according to the state-of-the-art;
Fig. 2 is a flow diagram of a method according to some example implementations as described herein;
Fig. 3 is a flow diagram of a method according to some example implementations as described herein;
Fig. 4 is a flow diagram of a method according to some example implementations as described herein;
Fig. 5 is a flow diagram of a method according to some example implementations as described herein;
Fig. 6 is an implementation of a method according to some example implementations as described herein;
Fig. 7 is a flow diagram of a method according to some example implementations as described herein; and
Fig. 8 is a block diagram of a network according to some example implementations as described herein.

### Detailed Description

In the following description, for purposes of explanation and not limitation, specific details are set forth in order to provide a thorough understanding of the present disclosure. It will be apparent to one of skill in the art that the present disclosure may be practiced in other embodiments that depart from these specific details.

While, for example, the following description focuses on an exemplary network configuration in accordance with 5G specifications, the present disclosure is not limited in this regard. The present disclosure could, for example, also be implemented in other cellular or non-cellular wireless communication networks, such as those complying with 4^{th} generation (4G) specifications (e.g., in accordance with the Long Term Evolution (LTE) specifications as standardized by the 3^{rd} Generation Partnership Project (3GPP)).

Those skilled in the art will further appreciate that the steps, services and functions explained herein may be implemented using individual hardware circuits, using software functioning in conjunction with a programmed microprocessor or general purpose computer, using one or more application specific integrated circuits (ASICs) and/or using one or more digital signal processors (DSP). It will also be appreciated that when the present disclosure is described in terms of a method, it may also be embodied in one or more processors and one or more memories coupled to the one or more processors, wherein the one or more memories store one or more computer programs that perform the steps, services and functions disclosed herein when executed by the one or more processors.

In the following description of exemplary implementations, the same reference numerals denote the same or similar components.

The present disclosure relates in particular to segmenting audio and video requests in video traffic streams. The data/video traffic may hereby, in some examples, be encrypted. The video stream may be an OTT video stream for which quality of experience may be analyzed.

When a mobile subscriber uses a video streaming service (for example YouTube, Netflix, Facebook, etc.), the content may have an audio stream as well as a video stream. If the traffic is not segmented into audio and video traffic, depending on the use-case, this may introduce a bias into an estimation method for determining quality (of experience) of the data traffic.

In some cases, an MNO may not be interested in the audio quality of a video session. However, when network conditions worsen, this may change. For example, in the case of bitrate, if the audio and video streams are not treated separately, the estimated bitrate may be the sum of the audio and video bitrate. In case of highquality videos, the video bitrate may be at least one order of magnitude larger than the audio bitrate, so that the bias may be comparatively small (for example roughly under 10%). However, when network conditions are insufficient (that is network quality is below a threshold), so that the video resolution is very low (under a threshold), the audio and video bitrate may be of the same order of magnitude. The estimated bitrate may then be up to roughly double the original video bitrate. This example shows that not separating the two kinds of traffic (i.e. audio traffic and video traffic) may have a severe (or the most severe) impact when it may be the least desired, that is in cases where customer experience is affected in a negative way.

Instead of seeing the actual effect, one may only see an estimate which reflects (much) better video quality than the original. Since video resolution is related to bitrate, it may suffer in a similar way. In addition, the type of content may also have a misleading effect: if someone is watching a music video with a constant background, then the video traffic may again be of the same order of magnitude as the audio traffic. Regardless of video resolution, a still image may be compressed significantly. Therefore, video resolution estimates would be biased downwards, indicating bad customer experience even though quality of experience is sufficiently high (so a false positive alarm may be generated). In some instances, music videos may be given their own "resolution label", for which audio and video traffic may need to be separated.

Furthermore, since audio traffic is generally smaller than video traffic, it is common (although not necessary) for video player clients to download audio data in a single Hypertext Transfer Protocol (HTTP) request, unlike video traffic which may take several requests. It may thus be preferable to identify periodic patterns by analyzing audio requests only.

Example implementations according to the present disclosure allow for analyzing quality of experience based on traffic which is robust in relation to network conditions. Furthermore, example implementations according to the present disclosure consider characteristics of requests sent from the user equipment to the server.

Based on example implementations as described herein, adaptive solutions are provided which take into account the possibility of request sizes potentially changing significantly, whereby, for example, a new video may have a very different URL than the previous video.

Outlier requests may be handled according to example implementations as described herein, whereby these outlier requests may have sizes above or below certain thresholds. Outliers may be removed in a very specific way that is designed to suit characteristics of video streaming, enabling the use of a highly adaptive linear discriminant function. The linear discriminant function may be used in order to separate the audio and video content based on a request size of a request sent from the user equipment to the server. The predictions of several discriminant functions given by different time windows may hereby be combined.

Further still, example implementations according to the present disclosure may, in some examples, take into account multiple uplink packets, so that it may be prevented that requests that exceed a Maximum Transmission Unit (MTU) size spoil upcoming predictions.

According to the present disclosure, one or more nodes or one or more (e.g. virtualized) network functions, or a system which comprises such node(s) and/or (virtualized) network function(s) may be provided, which can analyze captured raw network traffic between a user equipment and a video service provider's server, which may be generated while the user is watching a video online.

Examples as described herein may be implemented, e.g., independently both from the core network and the radio network. A Network Management (NM) function may consume traffic and various type of data both from the core network and the radio network. Examples outlined herein may, e.g., not receive an input from the radio network. The tapping part of the solution (where the Internet Protocol (IP) packets enter the analysis) may be close to the core network elements (interfaces) so that the tapping (which may be expensive) can be efficient. The Packet Filtering, Connection/Flow Separation, and Partial Request-Response Reconstruction parts of the solution may be implemented "near" the tapping point (first level analysis). When the tapping is performed and the first level of analysis has been completed, smaller data structures may be generated and sent to detailed analysis. This second level analysis may be performed by a set of algorithms. It may also be possible to perform this second level of analysis in the cloud.

Example implementations as described herein may introduce a module that separates online the audio and video streams of the typically encrypted mobile data traffic.

The system may partially reconstruct HTTP requests and their corresponding responses. As a result, only properties that are meaningful may be restored in some cases for further analysis, such as size, direction, arrival time and length.

Performance may be improved by filtering the requests, if necessary, for example by removing (e.g.) POST requests sent from the user equipment to the server.

The system may identify if a response to a given request carries video and/or audio content by using, in some examples, (quickly) adapting separating hyperplanes on the request sizes (not the response sizes). Before updating the hyperplane, outliers may be removed.

Based on example implementations as described herein, audio and video traffic in encrypted or non-encrypted video streams, which rely, for example, on Dynamic Adaptive Streaming over HTTP (DASH)-like protocols (either over Transmission Control Protocol (TCP) or User Datagram Protocol (UDP)), may be separated.

Example implementations according to the present disclosure may be used to separate audio and video key performance indicators (KIPs) for the video stream traffic, whereby the video KPIs are more accurate.

Partial request-response reconstructions may be applied so as to analyze quality of experience of the data traffic.

Example implementations involve advanced filtering, utilizing partial reconstruction and characteristics of request types.

In some examples, partial request-response reconstruction may rely solely on packet header information, such as, e.g., source/destination address and port, and/or packet size, and/or packet arrival time, which makes it computationally more efficient. It may also work regardless of the traffic being unencrypted or encrypted, because it does not rely on deep packet inspection. The proposed way to do partial reconstruction may handle cases with large request sizes (exceeding MTU).

Unnecessary traffic in the form of request-response pairs is filtered out easier, since those are the atomic units of data transmission from the point of view of the application layer, so that it may therefore be easier to formulate meaningful rules for them.

Using the request size (and not the response size) for separation may be much more robust. For good quality videos, either of them may work fine. However, for low quality videos, the audio and video traffic may be almost equal, rendering response size based segmentation potentially impossible. On the other hand, request sizes (practically, URL lengths) may be unaffected by this.

Furthermore, using simple separating hyperplanes may make segmentation also computationally more efficient, allowing real-time application. Different videos or different resolutions are available at different URLs that may vary in length widely, therefore sudden level shifts are expected and must be handled - quickly changing separating hyperplanes make this possible.

However, highly adaptive methods are generally vulnerable to the emergence of outlier requests. Such outliers may be quite common (they may be meta-data requests by the client, or reports to the server), and may (potentially seriously) affect detecting performance - by filtering them first, the method becomes robust, yet remains highly adaptive.

The proposed solution may be implemented in a streaming fashion, fitting into modern cloud native data pipelines/architectures.

The solution works on both TCP and UDP traffic (such as the QUIC protocol).

By separating audio and video streams, the existing QoE computation methods may provide more accurate video QoE metrics. In addition, separate QoE metrics may be available for the audio stream as well.

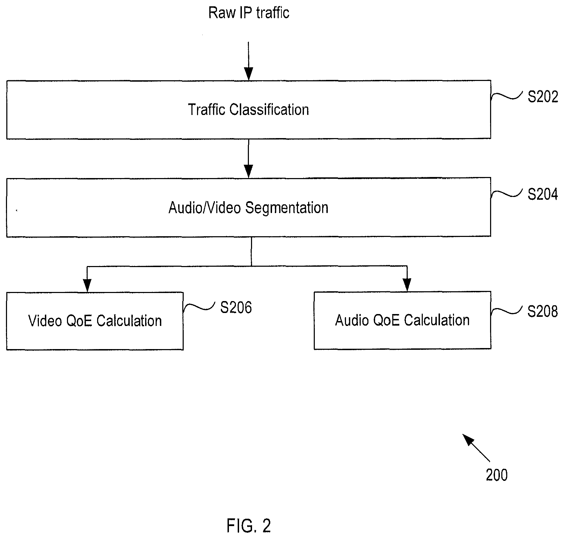

Figure 2 is a flow diagram of a method 200 according to some example implementations as described herein.

Raw IP traffic (IP packets) is processed and traffic classification is applied (S202), as is outlined above in relation to figure 1.

The output of traffic classification is, however, according to examples as described herein then fed into the audio/video segmentation module instead of the QoE calculation system directly. For different services, it may be necessary, in some examples, to use slightly different implementations of audio/video segmentation. The audio/video segmentation may filter out the audio content and stream the videorelated content to the QoE measurement system, or it may stream both audio and video content with a flag that indicates which is which. Depending on the QoE measurement tool, its input interface may, in some examples, need to be adapted to the output stream of the audio/video segmentation system. By introducing the audio/video segmentation system, not only current state-of-the-art video QoE measurement systems can provide improved estimations, but it also makes it possible to provide audio QoE measurements by streaming the audio part of the traffic into an audio QoE calculation system.

Therefore, once the audio and video traffic is separated in the audio/video segmentation (S204), the video traffic may be analyzed in the video QoE calculation module (S206) and the audio traffic may be analyzed in the audio QoE calculation module (S208).

In classical (non-virtualized) networks, the solution may be implemented by a small set of nodes/network functions (NFs), as is shown in figure 2 in relation to the traffic classification module, the audio/video segmentation module, the video QoE calculation module and the audio QoE calculation module.

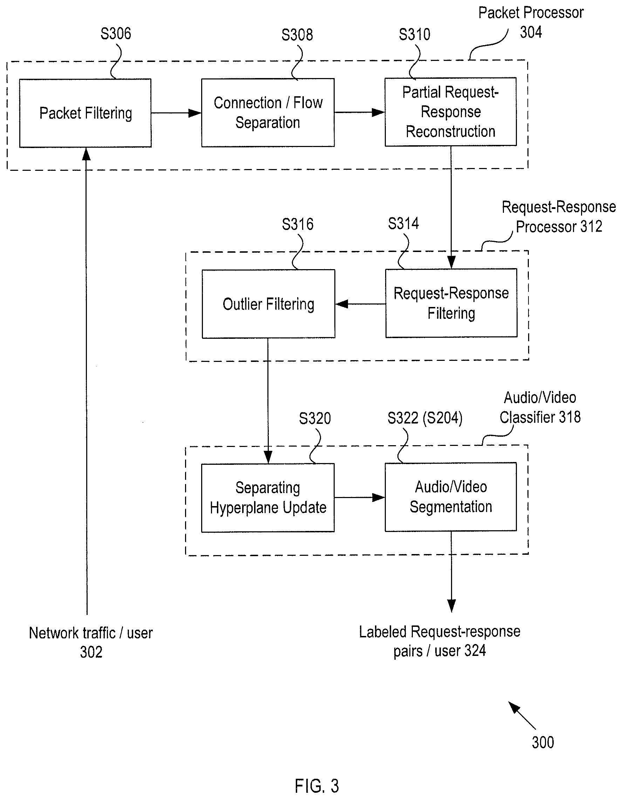

Figure 3 is a flow diagram of a method 300 according to some example implementations as described herein.

In figure 3, the processes is described for a single subscriber, but it will be appreciated that the nodes/NFs may operate on multiple subscribers (in parallel).

Depending on the infrastructure, the solution may be implemented in two ways: either having three nodes/NFs (Packet Processor 304, Request-Response Processor 312, Audio/Video Classifier 318), or having seven nodes/NFs, one for each phase of the process, as indicated in figure 2. The three-node/NF implementation may group together closely linked steps of the process, separating them at interfaces with different output frequencies. This means that inside the Packet Processor 304, packets are processed which are the most frequent elements. From the packets, HTTP requests and responses are (partially) created, which usually consist of several packets, therefore reducing the frequency of the output (for example, for every ten packets, there may be one request). Each HTTP request is followed by an HTTP response, forming a pair - to this end, a request-response pair is handled as a single element.

In this example, network traffic is provided from a user 302 to the packet processor 304. The node/NF first filters incoming packets at step S306, for example in order to remove control messages, such as (but not limited to) acknowledgement (ACK) messages. This may be achieved by, e.g., comparing the size of the packets to a threshold - this way even messages of protocols on UDP may be handled (like Quick UDP Internet Connections (QUIC)).

Following this, each packet is, in this example, processed further, together with other packets that were transmitted over the same connection (e.g. over the same TCP session). In some examples, a connection/flow separation may be applied to the filtered packets at step S308. This is an important step, because a subscriber can have several open connections at the same time, but partial request-response reconstruction may, in some examples, only be done on a per-connection basis.

The partial request-response reconstruction is then performed in the packet processor 304 at step S310.

The request-response pair(s) is (are) then sent from the packet processor 304 to the request-response processor 312.

In the request-response processor 312, request-response filtering is applied at step S314 and outlier are filtered at step S316.

Afterwards, in this example, in the audio/video classifier 318, separating hyperplanes are updated at step S320, and audio/video segmentation is applied at step S322 (which may correspond to step S204 shown in figure 2). From the audio/video classifier 318, labelled request-response pairs are output (324).

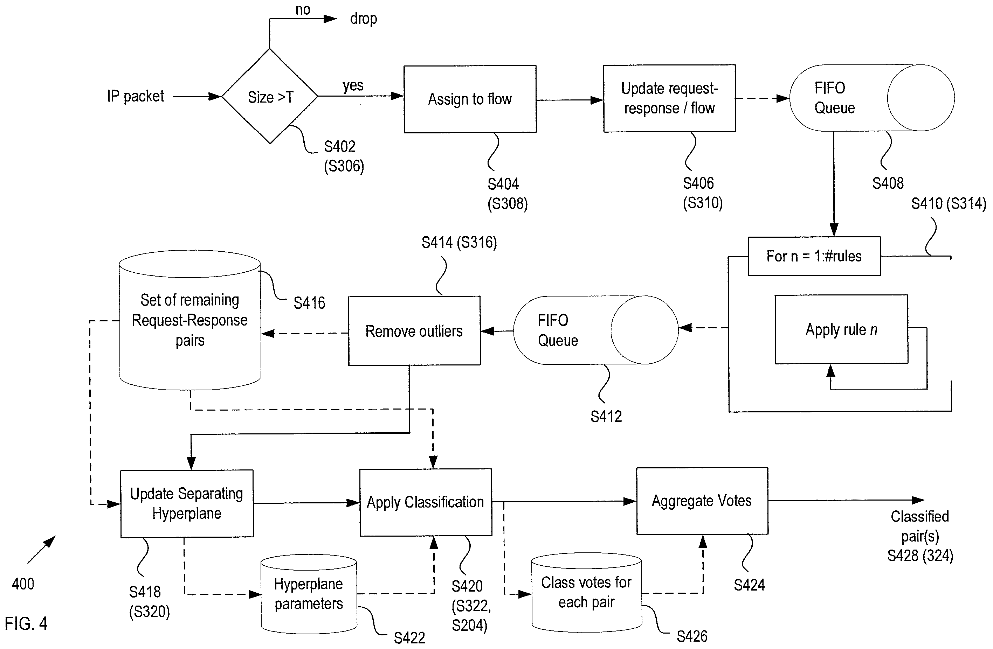

Figure 4 is a flow diagram of a method 400 according to some example implementations as described herein, in which partial reconstruction is depicted.

Inside a connection, the request-response pairs may manifest as a series of one or more uplink packets (the request, fragmented when exceeding the Maximum Transfer Unit size), followed by a series of one or more downlink packets (the response, fragmented when exceeding MTU size). Using this pattern, packets may be grouped together that form the request and packets that form the following response, because a request always precedes the response. An uplink packet that follows a downlink packet may indicate the start of a new request, while a downlink packet that follows an uplink packet may indicate the start of the following response. The size of the packets between may be aggregated. When a new request is started, then the preceding request and response form a pair, which is then sent into a queue containing such pairs, waiting for further processing. This queue holds pairs from all connections for the given subscriber. This reconstruction scheme works, in this example, with two assumptions: 1) the server does not send requests to the client, and 2) there is no request multiplexing in the open connections. Note that while both assumptions could be violated theoretically, it is unlikely to happen in practice. Clients are supposed to send requests - even if they have to report something, it may happen in the form of a POST request, rather than the server sending a GET request to the client. Multiplexing is also something that is unlikely to happen. HTTP 1.2+ allows for different kinds of multiplexing, but these are meant for web traffic, where a lot of connections are opened and closed, which is time consuming and is avoided by multiplexing requests. However, video streams keep connections open, therefore overhead of connection creation is avoided. Also, there is no point in multiplexing requests due to the causal nature of requests: if the client quickly needs some part of a video (e.g. buffering phase at the start of a video or after a seek), then it does not help if some other parts arrive sooner, possibly taking away bandwidth from the most important part and risking a video freeze; also, if the client does not need a part quickly, then it is due to having a healthy buffer, therefore it may suffice to send only one request and append the response at the end of the buffer. Another reason for avoiding multiplexing is the BitTorrent effect: the more connections an application has, the higher its chance to send or receive data over a channel with limited capacity (due to the congestion control mechanisms built into transmission protocols).

In this example, it is determined at step 402 (which may correspond to step S306) in the packet processor 304 if the size of an IP packet is above a threshold (T) or not. If it is not above the threshold, in this example, the IP packet is dropped. If it is above the threshold, the IP packet is assigned to a flow at step S404 (which may correspond to step S308). Afterwards, the request-response/flow is updated at step S406 (which may correspond to step S310) and a pair is provided to a first-in, first-out queue (S408).

The request-response pairs are sent to the Request-Response Processor node/NF. This node/NF has lower hardware requirements, since there are much less request-response pairs than packets - processing them takes less effort. The node/NF applies a set of predefined rules at step S410 (which may correspond to step S314) (which may have to be adapted to the exact OTT video service provider) to filter out unnecessary pairs. For example, one may only be interested in the GET requests sent by the client to the server and the corresponding responses. However, there are different types of requests (e.g. POST, OPTIONS, etc.) with different characteristics. Usually, POST requests may be used by the client to send data to the server. To this end, the size of the request may be very large, while the response may be usually small (e.g. an acknowledgement message, like 200 OK). For GET requests, the request may contain only an URL and some cookies, therefore the request size may be small - however, the response contains the requested data, which may be much larger.

The pairs are then, in this example, provided to a further first-in, first-out queue (S412).

Some request-response pairs may bypass the filters though, causing potential issues. In order to defend the segmentation from these, outliers are, in this example, eliminated at step S414 (which may correspond to step S316).

It is to be noted that request-response pairs are stored in a FIFO queue (S412), which may simply be a time window. The number of elements in the time window is usually small (around 5-20) in order to have real-time output (if the periodicity is 30 seconds, then even 10 requests mean that requests from 5 minutes ago still affect the current output). The small number of elements prohibits the use of most statistical and machine learning techniques, only the simplest ones may have a chance. Since separation may be done based on the request sizes, it is considered, in some examples, to remove outliers based on request size only. Consider first how a time series of request sizes looks like: audio requests tend to be smaller, while video requests tend to be larger with respect to audio requests - if plotted over time, one may draw a horizontal line to separate the two. Using the idea of Fischer's linear discriminant, this may be achieved by calculating the average: the average may not be in the center, but it may separate the two classes. In small samples, outliers may have an especially large effect on the sample mean. This may be utilized to filter outliers as follows: copy the contents of the queue, calculate the mean request size, then calculate the ratio of requests that fall above this value; if this exceeds a predefined constant (meaning that there is a "significant" amount of requests above the mean), then those are not outliers since there are many of them. If the ratio of samples above the mean is small, then it indicates that a few requests pulled the mean upwards (leaving almost all other request under the mean), therefore they must have been outliers and should be removed from the copy. Here, one may also use the likely assumption that there are more video than audio requests; otherwise the video requests could seem to be outliers. After this, the mean is calculated again, but this time the ratio of samples below the mean is calculated: if this exceeds some threshold, then these requests are deemed audio requests because there are several of them; however, if there are only a few requests below the mean, they are considered lower outliers and should be removed from the copy.

The set of remaining request-response pairs may optionally be output separately (S416).

The Request-Response Processor then sends the filtered copy of the time window to the Audio/Video Classifier node/NF.

Once outliers are removed, (one or more) separating hyperplanes may be updated at step S418 (which may correspond to step S320). This may be performed by the audio/video classifier 318 node/NF based on the pairs once outliers are removed at step S414, and optionally based on the set of remaining request-response pairs (S416).

The discriminant function/separating hyperplane may be given by the sample mean. Each remaining request in the copy may be compared to this - if a request exceeds the mean, it is considered a video request, otherwise an audio request.

In this example, information from the updating of the separating hyperplane may optionally be provided to output hyperplane parameters (S422) which may be fed into the step of applying the classification (step S420, which may correspond to step S322 and/or S204), which may further optionally be based on the set of remaining request-response pairs (S416).

Note that as time goes by and the original window slides, it is possible to get different classifications for the same request. This can happen for example when a large level shift emerges in the Uniform Resource Locator (URL) of the GET requests, which will first be considered an outlier and removed from copies of the queue, but as more and more large requests are put into the queue and the older, smaller requests are shifted out, they may stop becoming outliers and may not be removed from the copy, hence their classification changes. To overcome this situation, it is possible to keep track of all class labels assigned to a request and use majority voting at the time when the request is shifted out of the queue. However, this can, again, introduce delay into the output (equaling the length of the window). In this example, once the classification is applied at step S420, class votes for each pair are performed at step S426 and provided as an input to the aggregation of the votes at step S424.

Finally, the classified request-response pair(s) is (are) output at step S428.

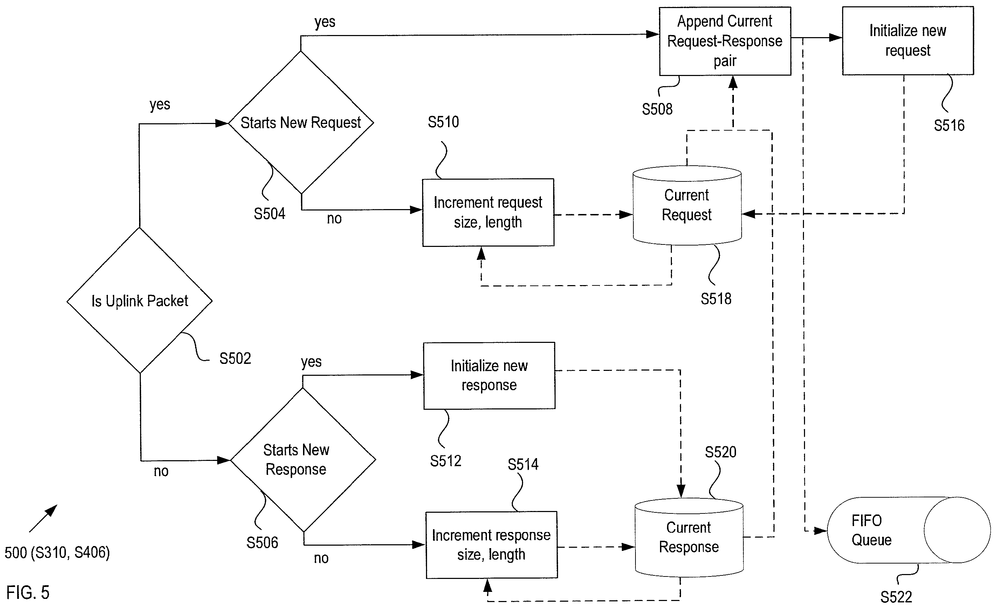

Figure 5 is a flow diagram of a method 500 according to some example implementations as described herein. It depicts an example of partial request-response reconstructions (which may correspond to step S310 shown in figure 3 and/or step S406 shown in figure 4).

In this example, at step 502, it is determined if an uplink packet is present. If this is not the case, it is determined at step S506 whether a new response is started. If this is not the case, at step S514 the response size and/or length is incremented. If it is determined at step S506 that a new response is started, the new response is initialized at step S512. The output of step S514 and step S512, respectively, is output as a current response at step S520. The current response may be fed back to step S514 to increment the response size and/or length.

If it is determined at step S502 that an uplink packet is present, it is determined at step S504 whether a new request is started. If this is not the case, the request size and/or length is incremented at step S510. This is output to a current request S518, which may optionally be fed back to the performance of step S510 to increment the request size and/or length further.

The output of step S518 or step S520, or the output of the determination at step S504 that a new request is started is used to append a current request-response pair at step S508. Based on this, the new request is initialized at step S516, which may optionally be fed back to the current request generation at step S518.

In this example, the appended current request-response pair may be provided to the first-in, first-out queue at step S522.

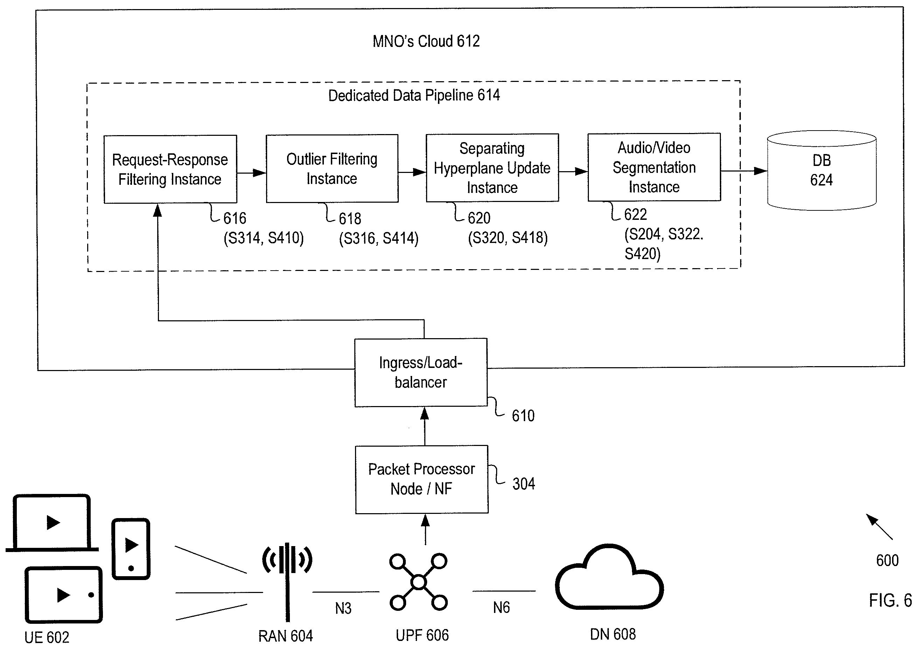

Figure 6 is an implementation 600 according to some example implementations as described herein. It depicts an example cloud implementation of examples outlined throughout the present disclosure.

The examples described herein may be implemented in cloud environments, e.g. via Virtualized Network Functions (VNF) or Cloud-native Network Functions (CNF). An overview is presented in figure 6, depicting a possible connection with a 5G network.

As the solution's primary inputs are IP packets, the Packet Processor Node/NF 304 may need to have a direct connection with the User Plane Function (UPF) 606. In this example, the UPF 606 is coupled to data network 608 via an N6 interface, and to the RAN 604 (in which UEs 602 are provided) via an N3 interface.

The Packet Processor node/NF 304 may have a quite heavy load. Therefore, it may be good practice to keep it as a physical node/NF instead of a CNF or VNF. However, subsequent stages of processing may be less computationally intensive and may be implemented as a pipeline of CNFs/VNFs. Since each component of the system may keep track of a set of subscribers, the subscribers may be load-balanced to different instances of the components in the cloud 612 of the MNO; one single instance may not have enough memory, and it may also be important to assign every packet from a specific subscriber to the same component instances. This can be achieved by either creating network slices for different sets of subscribers and having instances of the pipeline in each slice or using some ingress load balancer 610 at the entry point of the cloud 612 (or a part of the cloud).

As can be seen, in this example, the ingress load balancer 610 is coupled to the request-response filtering instance 616, which, together with the outlier filtering instance 618, the separating hyperplane update instance 620 and the audio/video segmentation instance 622, is provided in the dedicated data pipeline 614.

The ingress load balancer 610 provides data to the request-response filtering instance 616 (which may correspond to performing of step S314 and/or step S410). After the request-response filtering instance 616, outlier filtering 618 is performed (which may correspond to step S316 and/or step S414). Thereafter, separating hyperplane(s) updating 320 is performed (which may correspond to step S320 and/or step S418). Finally, audio/video segmentation 622 is performed (which may correspond to step S204 and/or step S322 and/or step S420).

Finally, the output of the audio/video segmentation instance 622 is coupled to database 624 for storing labelled request-response pairs. The database 624 is, in this example, provided in the MNO's cloud 612 as well.

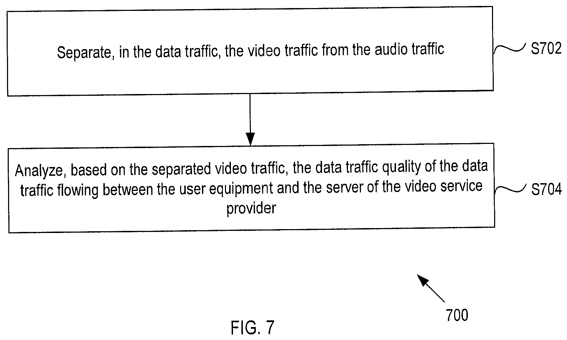

Figure 7 is a flow diagram of a method 700 according to some example implementations as described herein.

The method 700 comprises, at step S702, separating, in the data traffic, the video traffic from the audio traffic. At step S704, the data traffic quality of the data traffic flowing between the user equipment and the server of the video service provider is analyzed based on the separated video traffic.

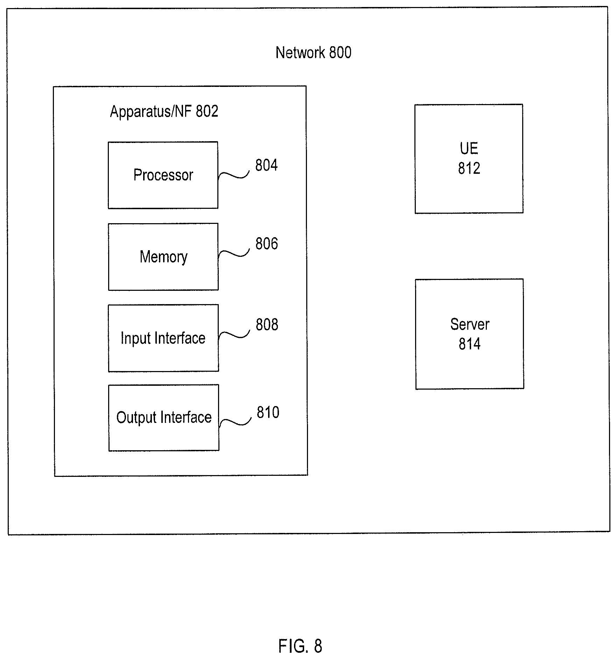

Figure 8 is a block diagram of a network 800 according to some example implementations as described herein.

The network 800 comprises, in this example, an apparatus or network function 802 which comprises a processor 804, a memory 806, an input interface 808 and an output interface 810. The network 800 further comprises a user equipment 812 and a server 814 of a video service provider.

The apparatus or network function 802 is configured to analyze data traffic quality of data traffic flowing between the user equipment 812 and the server 814 of the video service provider, wherein the data traffic comprises video traffic and audio traffic. The apparatus or the network function 802 is configured to separate, in the data traffic, the video traffic from the audio traffic, and analyze, based on the separated video traffic, the data traffic quality of the data traffic flowing between the user equipment 812 and the server 814 of the video service provider.

The present invention is only limited by the claims that follow.

## Claims

1. A method (700) for analyzing data traffic quality of data traffic flowing between a user equipment and a server of a video service provider, wherein the data traffic comprises video traffic and audio traffic, the method comprising:
separating (S702), in the data traffic, the video traffic from the audio traffic; and
analyzing (S704), based on the separated video traffic, the data traffic quality of the data traffic flowing between the user equipment and the server of the video service provider,
further comprising, prior to said separating the video traffic from the audio traffic, reconstructing, from one or more data packets in the data traffic, one or more request-response pairs from corresponding, respective requests sent from the user equipment to the server and respective responses sent from the server to the user equipment,
wherein said separating the video traffic from the audio traffic comprises separating the video traffic from the audio traffic within the one or more reconstructed request-response pairs, and
wherein said analyzing of the data traffic quality of the data traffic is based on the video traffic which is separated from the audio traffic within the reconstructed one or more request-response pairs.

2. The method as claimed in claim 1, wherein the data traffic quality comprises a quality of experience relative to the data traffic and,
wherein the quality of experience relative to the data traffic relates to a quality of experience of the video traffic.

3. The method as claimed in claim 1 or 2, wherein a plurality of said request-response pairs are reconstructed from a plurality of the data packets and/or
wherein said reconstructing is based on packet header information in the one or more data packets and/or
the method further comprising assigning the one or more data packets to one or more connections between the user equipment and the server, and wherein the one or more request-response pairs are reconstructed on a per-connection basis and/or
wherein processing the one or more data packets is performed by a network entity or network function which is different from a network entity or network function by which processing of the one or more request-response pairs is performed.

4. The method as claimed in any one of claims 1 to 3, further comprising filtering out, prior to said separating of the video traffic from the audio traffic, one or more request-response pairs and,
wherein the filtering out of the one or more request-response pairs is dependent on a said video service provider.

5. The method as claimed in claim 4, wherein whether to filter out a said request-response pair is based on a request size of a request, to which the request responsepair corresponds, sent from the user equipment to the server and,
wherein a said request-response pair is filtered out if the request size is below an average request size of requests sent from the user equipment to the server over a predefined time period and,
wherein a said request-response pair is filtered out (i) if the request size is above the average request size of requests sent from the user equipment to the server over the predefined time period and (ii) if a ratio of requests with request sizes above the average request size to all requests is below a predefined value and,
wherein a said request-response pair is filtered out if the ratio of requests with request sizes below the average request size to all requests is below a further predefined value.

6. The method as claimed in any preceding claim, wherein the data traffic flows in an uplink direction from the user equipment to the server and,
wherein said analyzing of the data traffic quality is based on a plurality of uplink data packets and,
wherein said separating the video traffic from the audio traffic is performed while the user equipment receives video-content via the data traffic.

7. The method as claimed in any preceding claim, further comprising filtering out the audio traffic from the data traffic flowing between the user equipment and the server prior to said analyzing of the data traffic quality or
wherein the separated video traffic and the separated audio traffic each comprise a corresponding, respective indicator for indicating the separated video traffic and the separated audio traffic, respectively, and
wherein said analyzing of the data traffic quality is based on the separated video traffic indicated by the corresponding indicator and,
the method further comprising analyzing, based on the separated audio traffic, the data traffic quality of the data traffic flowing between the user equipment and the server of the video service provider and,
the method further comprising analyzing a video traffic quality based on the separated video traffic, and analyzing, independent from the analysis of the video traffic quality, an audio traffic quality based on the separated audio traffic.

8. The method as claimed in any preceding claim, wherein said analyzing of the data traffic quality is based on one or more key performance indicators computed for the separated video traffic and/or
the method further comprising, prior to said analyzing of the data traffic quality, removing one or more or all requests sent from the user equipment to the server.

9. The method as claimed in any preceding claim, wherein said separating of the video traffic from the audio traffic is based on a size of a request sent by the user equipment to the server.

10. The method as claimed in claim 9, wherein said separating of the video traffic from the audio traffic is based on a linear discriminant function being applied to the size of the request sent by the user equipment to the server and,
wherein the linear discriminant function comprises a combination of linear discriminant functions given by different time windows and,
wherein said separating of the video traffic from the audio traffic comprises applying a separating hyperplane to data in the data traffic.

11. The method as claimed in claim 5, when dependent from claim 10, wherein the linear discriminant function and/or the separating hyperplane is defined by an average request size of requests sent from the user equipment to the server and,
wherein a said request is identified as a video request if the request size is above the average request size, and wherein a said request is identified as an audio request if the request size is below the average request size.

12. The method as claimed in any one of the preceding claims, further comprising, prior to said separating of the video traffic from the audio traffic, applying majority voting to determine whether a said request-response pair is considered as audio traffic or video traffic and,
the method further comprising splitting the data traffic on a per-service basis relative to one or more services provided by the service provider, and wherein said analyzing comprises analyzing the data traffic quality separately for one or more of the one or more services and,
wherein, dependent on a said service, the audio traffic is either filtered out from the data traffic or is analyzed, separately from the video traffic, for data traffic quality analysis.

13. The method as claimed in any preceding claim, further comprising removing one or more control messages in data in the data traffic prior to said separating the video traffic from the audio traffic and,
wherein the one or more control messages are removed based on a determination that a size of a message is below a predefined threshold and/or
wherein the data traffic comprises encrypted data traffic and/or
wherein the data traffic comprises non-encrypted data traffic and/or
wherein the data traffic comprises a Transmission Control Protocol traffic stream and/or
wherein the data traffic comprises a User Datagram Protocol traffic stream.

14. A computer program product comprising program code portions that, when executed on at least one processor, configure the processor to perform the method of any one of the preceding claims and,
the computer program product being stored on a computer-readable recording medium or encoded in a data signal.

15. An apparatus or a network function (802) for analyzing data traffic quality of data traffic flowing between a user equipment (812) and a server (814) of a video service provider, wherein the data traffic comprises video traffic and audio traffic, and wherein the apparatus or the network function (802) is configured to:
separate, in the data traffic, the video traffic from the audio traffic; and
analyze, based on the separated video traffic, the data traffic quality of the data traffic flowing between the user equipment (812) and the server (814) of the video service provider,
the apparatus or the network function (802) further being configured to, prior to said separating the video traffic from the audio traffic, reconstructing, from one or more data packets in the data traffic, one or more request-response pairs from corresponding, respective requests sent from the user equipment to the server and respective responses sent from the server to the user equipment,
wherein said separating the video traffic from the audio traffic comprises separating the video traffic from the audio traffic within the one or more reconstructed request-response pairs, and
wherein said analyzing of the data traffic quality of the data traffic is based on the video traffic which is separated from the audio traffic within the reconstructed one or more request-response pairs.

## Patentansprüche

1. Verfahren (700) zum Analysieren der Datenverkehrsqualität von Datenverkehr, der zwischen einer Benutzerausrüstung und einem Server eines Videodiensteanbieters fließt, wobei der Datenverkehr Videoverkehr und Audioverkehr umfasst, wobei das Verfahren Folgendes umfasst:
Trennen (S702), in dem Datenverkehr, des Videoverkehrs von dem Audioverkehr; und
Analysieren (S704), basierend auf dem getrennten Videoverkehr, der Datenverkehrsqualität des Datenverkehrs, der zwischen der Benutzerausrüstung und dem Server des Videodiensteanbieters fließt,
weiter umfassend, vor dem Trennen des Videoverkehrs von dem Audioverkehr, das Rekonstruieren, aus einem oder mehreren Datenpaketen in dem Datenverkehr, eines oder mehrerer Anfrage-Antwort-Paare aus entsprechenden, jeweiligen Anfragen, die von der Benutzerausrüstung an den Server gesendet werden, und jeweiligen Antworten, die von dem Server an die Benutzerausrüstung gesendet werden,
wobei das Trennen des Videoverkehrs von dem Audioverkehr das Trennen des Videoverkehrs von dem Audioverkehr innerhalb des einen oder der mehreren rekonstruierten Anfrage-Antwort-Paare umfasst, und
wobei das Analysieren der Datenverkehrsqualität des Datenverkehrs auf dem Videoverkehr basiert, der von dem Audioverkehr innerhalb des rekonstruierten einen oder der mehreren rekonstruierten Anfrage-Antwort-Paare getrennt ist.

2. Verfahren nach Anspruch 1, wobei die Datenverkehrsqualität eine Erlebnisqualität in Bezug auf den Datenverkehr umfasst und,
wobei sich die Erlebnisqualität in Bezug auf den Datenverkehr auf eine Erlebnisqualität des Videoverkehrs bezieht.

3. Verfahren nach Anspruch 1 oder 2, wobei eine Vielzahl der Anfrage-Antwort-Paare aus einer Vielzahl der Datenpakete rekonstruiert wird und/oder
wobei das Rekonstruieren auf Paketkopf-Informationen in dem einen oder den mehreren Datenpaketen basiert und/oder
wobei das Verfahren weiter das Zuordnen des einen oder der mehreren Datenpakete zu einer oder mehreren Verbindungen zwischen der Benutzerausrüstung und dem Server umfasst, und wobei das eine oder die mehreren Anfrage-Antwort-Paare verbindungsbezogen rekonstruiert werden und/oder
wobei das Verarbeiten des einen oder der mehreren Datenpakete durch eine Netzwerkeinheit oder Netzwerkfunktion durchgeführt wird, die sich von einer Netzwerkeinheit oder Netzwerkfunktion unterscheidet, durch die das Verarbeiten des einen oder der mehreren Anfrage-Antwort-Paare durchgeführt wird.

4. Verfahren nach einem der Ansprüche 1 bis 3, weiter umfassend das Herausfiltern, vor dem Trennen des Videoverkehrs von dem Audioverkehr, eines oder mehrerer Anfrage-Antwort-Paare und,
wobei das Herausfiltern des einen oder der mehreren Anfrage-Antwort-Paare von dem Videodiensteanbieter abhängt.

5. Verfahren nach Anspruch 4, wobei das, ob ein Anfrage-Antwort-Paar herausgefiltert wird, auf einer Anfragegröße einer Anfrage basiert, der das Anfrage-Antwort-Paar entspricht, die von der Benutzerausrüstung an den Server gesendet wird, und
wobei ein Anfrage-Antwort-Paar herausgefiltert wird, wenn die Anfragegröße unter einer durchschnittlichen Anfragegröße von Anfragen liegt, die von der Benutzerausrüstung an den Server über einen vordefinierten Zeitraum gesendet werden, und
wobei ein Anfrage-Antwort-Paar herausgefiltert wird (i), wenn die Anfragegröße über der durchschnittlichen Anfragegröße von Anfragen liegt, die von der Benutzerausrüstung an den Server über den vordefinierten Zeitraum gesendet werden, und (ii), wenn ein Verhältnis von Anfragen mit Anfragegrößen über der durchschnittlichen Anfragegröße zu allen Anfragen unter einem vordefinierten Wert liegt, und
wobei ein Anfrage-Antwort-Paar herausgefiltert wird, wenn das Verhältnis von Anfragen mit Anfragegrößen unter der durchschnittlichen Anfragegröße zu allen Anfragen unter einem weiteren vordefinierten Wert liegt.

6. Verfahren nach einem vorstehenden Anspruch, wobei der Datenverkehr in einer Aufwärtsstrecke von der Benutzerausrüstung zu dem Server fließt, und
wobei das Analysieren der Datenverkehrsqualität auf einer Vielzahl von Aufwärtsdatenpaketen basiert, und
wobei das Trennen des Videoverkehrs von dem Audioverkehr durchgeführt wird, während die Benutzerausrüstung Video-Inhalte über den Datenverkehr empfängt.

7. Verfahren nach einem vorstehenden Anspruch, weiter umfassend das Herausfiltern des Audioverkehrs aus dem Datenverkehr, der zwischen der Benutzerausrüstung und dem Server fließt, vor dem Analysieren der Datenverkehrsqualität, oder
wobei der getrennte Videoverkehr und der getrennte Audioverkehr jeweils einen entsprechenden, jeweiligen Indikator umfassen, um den getrennten Videoverkehr beziehungsweise den getrennten Audioverkehr anzuzeigen, und
wobei das Analysieren der Datenverkehrsqualität auf dem getrennten Videoverkehr basiert, der durch den entsprechenden Indikator angezeigt wird, und
wobei das Verfahren weiter das Analysieren, basierend auf dem getrennten Audioverkehr, der Datenverkehrsqualität des Datenverkehrs umfasst, der zwischen der Benutzerausrüstung und dem Server des Videodiensteanbieters fließt, und
wobei das Verfahren weiter das Analysieren einer Videoverkehrsqualität basierend auf dem getrennten Videoverkehr umfasst, und das Analysieren, unabhängig von der Analyse der Videoverkehrsqualität, einer Audioverkehrsqualität basierend auf dem getrennten Audioverkehr.

8. Verfahren nach einem vorstehenden Anspruch, wobei das Analysieren der Datenverkehrsqualität auf einem oder mehreren Leistungskennzahlen basiert, die für den getrennten Videoverkehr berechnet werden, und/oder
wobei das Verfahren weiter das Entfernen einer oder mehrerer oder aller Anfragen, die von der Benutzerausrüstung an den Server gesendet werden, vor dem Analysieren der Datenverkehrsqualität umfasst.

9. Verfahren nach einem vorstehenden Anspruch, wobei das Trennen des Videoverkehrs von dem Audioverkehr auf einer Größe einer Anfrage basiert, die von der Benutzerausrüstung an den Server gesendet wird.

10. Verfahren nach Anspruch 9, wobei das Trennen des Videoverkehrs von dem Audioverkehr auf einer linearen Diskriminanzfunktion basiert, die auf die Größe der Anfrage angewendet wird, die von der Benutzerausrüstung an den Server gesendet wird, und
wobei die lineare Diskriminanzfunktion eine Kombination von linearen Diskriminanzfunktionen umfasst, die durch verschiedene Zeitfenster gegeben sind, und
wobei das Trennen des Videoverkehrs von dem Audioverkehr das Anwenden einer trennenden Hyperebene auf Daten in dem Datenverkehr umfasst.

11. Verfahren nach Anspruch 5, sofern abhängig von Anspruch 10, wobei die lineare Diskriminanzfunktion und/oder die trennende Hyperebene durch eine durchschnittliche Anfragegröße von Anfragen definiert wird, die von der Benutzerausrüstung an den Server gesendet werden, und
wobei eine Anfrage als Videoanfrage identifiziert wird, wenn die Anfragegröße über der durchschnittlichen Anfragegröße liegt, und wobei eine Anfrage als Audioanfrage identifiziert wird, wenn die Anfragegröße unter der durchschnittlichen Anfragegröße liegt.

12. Verfahren nach einem der vorstehenden Ansprüche, weiter umfassend, vor dem Trennen des Videoverkehrs von dem Audioverkehr, das Anwenden einer Mehrheitsentscheidung, um zu bestimmen, ob ein Anfrage-Antwort-Paar als Audioverkehr oder als Videoverkehr betrachtet wird, und
wobei das Verfahren weiter das Aufteilen des Datenverkehrs dienstbezogen in Bezug auf einen oder mehrere Dienste umfasst, die von dem Diensteanbieter bereitgestellt werden, und wobei das Analysieren das Analysieren der Datenverkehrsqualität getrennt für einen oder mehrere des einen oder der mehreren Dienste umfasst, und
wobei, abhängig von einem Dienst, der Audioverkehr entweder aus dem Datenverkehr herausgefiltert wird oder getrennt von dem Videoverkehr für die Datenverkehrsqualitätsanalyse analysiert wird.

13. Verfahren nach einem vorstehenden Anspruch, weiter umfassend das Entfernen einer oder mehrerer Steuernachrichten in Daten in dem Datenverkehr vor dem Trennen des Videoverkehrs von dem Audioverkehr, und
wobei die eine oder die mehreren Steuernachrichten basierend auf einer Bestimmung entfernt werden, dass eine Größe einer Nachricht unter einem vordefinierten Schwellenwert liegt und/oder
wobei der Datenverkehr verschlüsselten Datenverkehr umfasst und/oder
wobei der Datenverkehr unverschlüsselten Datenverkehr umfasst und/oder
wobei der Datenverkehr einen Datenstrom des Transmission Control Protocol umfasst und/oder
wobei der Datenverkehr einen Datenstrom des User Datagram Protocol umfasst.

14. Computerprogrammprodukt, umfassend Programmcodeabschnitte, die bei Ausführung auf mindestens einem Prozessor den Prozessor konfigurieren, das Verfahren nach einem der vorstehenden Ansprüche durchzuführen, und,
wobei das Computerprogrammprodukt auf einem computerlesbaren Aufzeichnungsmedium gespeichert oder in einem Datensignal kodiert ist.

15. Einrichtung oder Netzwerkfunktion (802) zum Analysieren der Datenverkehrsqualität von Datenverkehr, der zwischen einer Benutzerausrüstung (812) und einem Server (814) eines Videodiensteanbieters fließt, wobei der Datenverkehr Videoverkehr und Audioverkehr umfasst, und wobei die Einrichtung oder die Netzwerkfunktion (802) konfiguriert ist zum:
Trennen, in dem Datenverkehr, des Videoverkehrs von dem Audioverkehr; und
Analysieren, basierend auf dem getrennten Videoverkehr, der Datenverkehrsqualität des Datenverkehrs, der zwischen der Benutzerausrüstung (812) und dem Server (814) des Videodiensteanbieters fließt,
wobei die Einrichtung oder die Netzwerkfunktion (802) weiter konfiguriert ist zum Rekonstruieren, vor dem Trennen des Videoverkehrs von dem Audioverkehr aus einem oder mehreren Datenpaketen in dem Datenverkehr, eines oder mehrerer Anfrage-Antwort-Paare aus entsprechenden, jeweiligen Anfragen, die von der Benutzerausrüstung an den Server gesendet werden, und jeweiligen Antworten, die von dem Server an die Benutzerausrüstung gesendet werden,
wobei das Trennen des Videoverkehrs von dem Audioverkehr das Trennen des Videoverkehrs von dem Audioverkehr innerhalb des einen oder der mehreren rekonstruierten Anfrage-Antwort-Paare umfasst, und
wobei das Analysieren der Datenverkehrsqualität des Datenverkehrs auf dem Videoverkehr basiert, der von dem Audioverkehr innerhalb des rekonstruierten einen oder der mehreren rekonstruierten Anfrage-Antwort-Paare getrennt ist.

## Revendications

1. Procédé (700) d'analyse de qualité de trafic de données circulant entre un équipement utilisateur et un serveur d'un fournisseur de services vidéo, dans lequel le trafic de données comprend du trafic vidéo et du trafic audio, le procédé comprenant :
la séparation (S702), dans le trafic de données, du trafic vidéo du trafic audio ; et
l'analyse (S704), sur la base du trafic vidéo séparé, de la qualité de trafic de données circulant entre l'équipement utilisateur et le serveur du fournisseur de services vidéo,
comprenant en outre, avant ladite séparation du trafic vidéo du trafic audio, la reconstruction, à partir d'un ou de plusieurs paquets de données du trafic de données, d'une ou plusieurs paires requête-réponse à partir de requêtes respectives envoyées par l'équipement utilisateur au serveur et de réponses respectives envoyées par le serveur à l'équipement utilisateur,
dans lequel ladite séparation du trafic vidéo du trafic audio comprend la séparation du trafic vidéo du trafic audio au sein de l'une ou des plusieurs paires requête-réponse reconstruites, et
dans lequel ladite analyse de la qualité de trafic de données est basée sur le trafic vidéo qui est séparé du trafic audio au sein de l'une ou des plusieurs paires requête-réponse reconstruites.

2. Procédé selon la revendication 1, dans lequel la qualité de trafic de données comprend une qualité d'expérience relative au trafic de données, et
dans lequel la qualité d'expérience relative au trafic de données concerne la qualité d'expérience du trafic vidéo.

3. Procédé selon la revendication 1 ou 2, dans lequel une pluralité desdites paires requête-réponse est reconstruite à partir d'une pluralité de paquets de données et/ou
dans lequel ladite reconstruction est basée sur des informations d'en-tête de paquet dans l'un ou les plusieurs paquets de données et/ou
le procédé comprend en outre l'assignation de l'un ou des plusieurs paquets de données à une ou plusieurs connexions entre l'équipement utilisateur et le serveur, et dans lequel l'une ou les plusieurs paires requête-réponse sont reconstruites sur une base par connexion, et/ou
dans lequel le traitement de l'un ou des plusieurs paquets de données est réalisé par une entité réseau ou fonction réseau qui est différente d'une entité réseau ou fonction réseau par laquelle le traitement de l'une ou des plusieurs paires requête-réponse est réalisé.

4. Procédé selon l'une quelconque des revendications 1 à 3, comprenant en outre le filtrage, avant ladite séparation du trafic vidéo du trafic audio, d'une ou de plusieurs paires requête-réponse, et
dans lequel le filtrage de l'une ou des plusieurs paires requête-réponse dépend d'un dit fournisseur de services vidéo.

5. Procédé selon la revendication 4, dans lequel le filtrage ou non d'une dite paire requête-réponse est basé sur une taille de requête à laquelle la paire requête-réponse correspond, envoyée par l'équipement utilisateur au serveur, et
dans lequel une paire requête-réponse est filtrée si la taille de requête est inférieure à une taille de requête moyenne de requêtes envoyées à partir de l'équipement utilisateur au serveur au cours d'une période de temps prédéfinie, et
dans lequel une paire requête-réponse est filtrée (i) si la taille de requête est supérieure à la taille moyenne de requêtes envoyées à partir de l'équipement utilisateur au serveur au cours de la période de temps prédéfinie et (ii) si le rapport de requêtes avec des tailles de requête supérieures à la taille de requête moyenne par rapport à toutes les requêtes est inférieur à une valeur prédéfinie, et
dans lequel une dite paire requête-réponse est filtrée si le rapport de requêtes avec des tailles de requête inférieure à la taille de requête moyenne par rapport à toutes les requêtes est inférieur à une valeur prédéfinie supplémentaire.

6. Procédé selon une quelconque revendication précédente, dans lequel le trafic de données circule dans une direction de liaison montante à partir de l'équipement utilisateur vers le serveur, et
dans lequel ladite analyse de la qualité de trafic de données est basée sur une pluralité de paquets de données de liaison montante, et
dans lequel ladite séparation du trafic vidéo du trafic audio est réalisée pendant que l'équipement utilisateur reçoit du contenu vidéo par l'intermédiaire du trafic de données.

7. Procédé selon une quelconque revendication précédente, comprenant en outre le filtrage du trafic audio à partir du trafic de données circulant entre l'équipement utilisateur et le serveur avant ladite analyse de la qualité de trafic de données ou
dans lequel le trafic vidéo séparé et le trafic audio séparé comprennent chacun un indicateur respectif correspondant pour indiquer le trafic vidéo séparé et le trafic audio séparé, respectivement, et
dans lequel ladite analyse de la qualité de trafic de données est basée sur le trafic vidéo séparé indiqué par l'indicateur correspondant, et
le procédé comprenant en outre l'analyse, sur la base du trafic audio séparé, de la qualité de trafic de données circulant entre l'équipement utilisateur et le serveur du fournisseur de services vidéo, et
le procédé comprenant en outre l'analyse d'une qualité de trafic vidéo sur la base du trafic vidéo séparé, et l'analyse, indépendamment de l'analyse de la qualité de trafic vidéo, d'une qualité de trafic audio sur la base du trafic audio séparé.

8. Procédé selon une quelconque revendication précédente, dans lequel ladite analyse de la qualité de trafic de données est basée sur un ou plusieurs indicateurs clés de performance calculés pour le trafic vidéo séparé et/ou
le procédé comprenant en outre, avant ladite analyse de la qualité de trafic de données, le retrait d'une ou de plusieurs ou de toutes les requêtes envoyées à partir de l'équipement utilisateur au serveur.

9. Procédé selon une quelconque revendication précédente, dans lequel ladite séparation du trafic vidéo du trafic audio est basée sur une taille d'une requête envoyée par l'équipement utilisateur au serveur.

10. Procédé selon la revendication 9, dans lequel ladite séparation du trafic vidéo du trafic audio est basée sur une fonction discriminante linéaire étant appliquée à la taille de la requête envoyée par l'équipement utilisateur au serveur, et
dans lequel la fonction discriminante linéaire comprend une combinaison de fonctions discriminantes linéaires données par différentes fenêtres de temps, et
dans lequel ladite séparation du trafic vidéo du trafic audio comprend l'application d'un hyperplan de séparation à des données dans le trafic de données.

11. Procédé selon la revendication 5, lorsqu'il dépend de la revendication 10, dans lequel la fonction discriminante linéaire et/ou l'hyperplan de séparation est défini par une taille de requête moyenne de requêtes envoyées à partir de l'équipement utilisateur au serveur, et
dans lequel une dite requête est identifiée comme une requête vidéo si la taille de requête est supérieure à la taille de requête moyenne, et dans lequel une dite requête est identifiée comme une requête audio si la taille de requête est inférieure à la taille de requête moyenne.

12. Procédé selon l'une quelconque des revendications précédentes, comprenant en outre, avant ladite séparation du trafic vidéo du trafic audio, l'application d'un vote majoritaire pour déterminer si une dite paire requête-réponse est considérée comme du trafic audio ou du trafic vidéo, et
le procédé comprend en outre la répartition du trafic de données sur une base par service par rapport à un ou plusieurs services fournis par le fournisseur de services, et dans lequel ladite analyse comprend l'analyse de la qualité de trafic de données séparément pour un ou plusieurs de l'un ou des plusieurs services, et
dans lequel, en fonction d'un dit service, le trafic audio est soit filtré à partir du trafic de données, soit analysé, séparément du trafic vidéo, pour analyse de qualité de trafic de données.

13. Procédé selon une quelconque revendication précédente, comprenant en outre le retrait d'un ou de plusieurs messages de commande dans des données dans le trafic de données avant ladite séparation du trafic vidéo du trafic audio, et
dans lequel l'un ou les plusieurs messages de commande sont retirés sur la base d'une détermination qu'une taille d'un message est inférieure à un seuil prédéfini et/ou
dans lequel le trafic de données comprend du trafic de données chiffré et/ou
dans lequel le trafic de données comprend du trafic de données non chiffré et/ou
dans lequel le trafic de données comprend un flux de trafic de protocole de commande de transmission et/ou
dans lequel le trafic de données comprend un flux de trafic de protocole de datagramme utilisateur.

14. Produit de programme informatique comprenant des portions de code de programme qui, lorsqu'elles sont exécutées sur au moins un processeur, configurent le processeur pour réaliser le procédé selon l'une quelconque des revendications précédentes, et
le produit de programme informatique étant stocké sur un support d'enregistrement lisible par ordinateur ou codé dans un signal de données.

15. Appareil ou fonction réseau (802) pour l'analyse de qualité de trafic de données circulant entre un équipement utilisateur (812) et un serveur (814) d'un fournisseur de services vidéo, dans lequel le trafic de données comprend du trafic vidéo et du trafic audio, et dans lequel l'appareil ou la fonction réseau (802) est configuré pour :
séparer, dans le trafic de données, du trafic vidéo du trafic audio ; et
analyser, sur la base du trafic vidéo séparé, la qualité de trafic de données circulant entre l'équipement utilisateur (812) et le serveur (814) du fournisseur de services vidéo,
l'appareil ou la fonction réseau (802) étant en outre configuré pour, avant ladite séparation du trafic vidéo du trafic audio, reconstruire, à partir d'un ou de plusieurs paquets de données du trafic de données, une ou plusieurs paires requête-réponse à partir de requêtes respectives envoyées par l'équipement utilisateur au serveur et de réponses respectives envoyées par le serveur à l'équipement utilisateur,
dans lequel ladite séparation du trafic vidéo du trafic audio comprend la séparation du trafic vidéo du trafic audio au sein de l'une ou des plusieurs paires requête-réponse reconstruites, et
dans lequel ladite analyse de la qualité de trafic de données est basée sur le trafic vidéo qui est séparé du trafic audio au sein de l'une ou des plusieurs paires requête-réponse reconstruites.
